(19) Europäisches Patentamt
European Patent Office
Office européen des brevets

(11) EP 0 904 301 B1

(12) EUROPÄISCHE PATENTSCHRIFT

(45) Veröffentlichungstag und Bekanntmachung des Hinweises auf die Patenterteilung:
**16.10.2002 Patentblatt 2002/42**

(21) Anmeldenummer: **97927112.9**

(22) Anmeldetag: **03.06.1997**

(51) Int Cl.[7]: **C08F 4/642**, C08F 10/00

(86) Internationale Anmeldenummer:
**PCT/EP97/02868**

(87) Internationale Veröffentlichungsnummer:
**WO 97/047662 (18.12.1997 Gazette 1997/54)**

(54) **METALLOCENKATALYSATORSYSTEME MIT ANORGANISCHEN OXIDEN ALS TRÄGER**

METTALLOCENE CATALYST SYSTEMS WITH INORGANIC OXIDES AS CARRIERS

SYSTEMES DE CATALYSEURS A BASE DE METALLOCENE COMPORTANT DES OXYDES INORGANIQUES COMME SUPPORTS

(84) Benannte Vertragsstaaten:
**AT BE DE ES FI FR GB IT NL SE**

(30) Priorität: **11.06.1996 DE 19623225**
**04.07.1996 DE 19626834**
**20.05.1997 DE 19720980**

(43) Veröffentlichungstag der Anmeldung:
**31.03.1999 Patentblatt 1999/13**

(73) Patentinhaber: **Basell Polyolefine GmbH**
**77694 Kehl (DE)**

(72) Erfinder:
- **BIDELL, Wolfgang**
  **D-67112 Mutterstadt (DE)**
- **LANGHAUSER, Franz**
  **D-67152 Ruppertsberg (DE)**
- **FISCHER, David**
  **D-67161 Gönnheim (DE)**
- **GREGORIUS, Heike**
  **D-67056 Ludwigshafen (DE)**
- **KRISTEN, Marc, Oliver**
  **D-67117 Limburgerhof (DE)**
- **HÜFFER, Stephan**
  **D-67071 Ludwigshafen (DE)**
- **MÜLLER, Patrik**
  **D-67661 Kaiserslautern (DE)**
- **HINGMANN, Roland**
  **D-68526 Ladenburg (DE)**
- **SCHWEIER, Günther**
  **D-67159 Friedelsheim (DE)**
- **MOLL, Ulrich**
  **D-67487 St. Martin (DE)**
- **MARCZINKE, Bernd, Lothar**
  **D-67346 Speyer (DE)**
- **KERSTING, Meinolf**
  **D-67435 Neustadt (DE)**
- **GRASMEDER, John, Russell**
  **D-67246 Dirmstein (DE)**
- **MC KENZIE, Ian, David**
  **Welwyn Garden City WD6 1AF (GB)**
- **JONES, Peter, John, Vaughan**
  **Billingham, Cleveland TS22 5LS (GB)**

(56) Entgegenhaltungen:
**EP-A- 0 034 303**
**EP-A- 0 669 346**
**WO-A-96/05236**

EP 0 904 301 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die vorliegende Erfindung betrifft Katalysatorsysteme zur Polymerisation von $C_2$- bis $C_{12}$-Alk-1-enen, enthaltend

A) einen anorganischen Träger,

B) mindestens einen Metallocenkomplex,

C) mindestens eine metalloceniumionenbildende Verbindung und

D) gegebenenfalls mindestens eine organische Metallverbindung eines Alkali- oder Erdalkalimetalls oder eines Metalls der III. Hauptgruppe des Periodensystems,

wobei als anorganischer Träger ein anorganisches Oxid verwendet wird, welches einen pH-Wert von 1 bis 6 und Hohlräume und Kanäle aufweist, deren makroskopischer Volumenanteil am Gesamtpartikel im Bereich von 5 bis 30 % liegt.

Weiterhin betrifft die vorliegende Erfindung ein Verfahren zur Herstellung von Polymerisaten von $C_2$- bis $C_{12}$-Alk-1-enen mit Hilfe dieser Katalysatorsysteme, die hiernach erhältlichen Polymerisate sowie Folien, Fasern und Formkörper aus diesen Polymerisaten.

Metallocenkatalysatoren sind Komplexverbindungen aus Metallen von Nebengruppen des Periodensystems mit organischen Liganden, die zusammen mit metalloceniumionenbildenden Verbindungen ein wirksames Katalysatorsystem ergeben. Sie erlauben die Herstellung neuartiger Polyolefine. Für eine kommerzielle Nutzung solcher Metallocenkatalysatoren in gängigen technischen Verfahren ist gewöhnlich eine Trägerung erforderlich, da hierdurch Polymerisate mit verbesserter Morphologie erhalten werden, wie in der EP-A 294 942 beschrieben. Als Träger werden häufig anorganische oder organische Oxide eingesetzt. Die Produktivität der geträgerten Metallocenkatalysatoren ist noch unbefriedigend.

Anorganische Oxide, wie beispielsweise Kieselgel ($SiO_2$), werden auch bei der Propylenpolymerisation mit Hilfe von Ziegler-Natta-Katalysatorsystemen verwendet (US-A 4 857 613, US-A 5 288 824). Die dabei erhaltenen Propylenpolymerisate können mit einer recht hohen Produktivität hergestellt werden, sie sind aber meist durch eine breite Molmassenverteilung gekennzeichnet und darüber hinaus weisen sie noch Nachteile wie beispielsweise einen ungleichmäßigen Comonomereinbau auf.

Der vorliegenden Erfindung lag daher die Aufgabe zugrunde, Katalysatorsysteme zur Polymerisation von $C_2$- bis $C_{12}$-Alk-1-enen zu entwickeln, die zu Polymerisaten von $C_2$- bis $C_{12}$-Alk-1-enen mit einer engen Molmassenverteilung führen, welche die geschilderten Nachteile nicht aufweisen und die mit hoher Produktivität erhalten werden.

Demgemäß wurden Katalysatorsysteme zur Polymerisation von $C_2$- bis $C_{12}$-Alk-1-enen gefunden, die

A) einen anorganischen Träger,

B) mindestens einen Metallocenkomplex,

C) mindestens eine metalloceniumionenbildende Verbindung und

D) gegebenenfalls mindestens eine organische Metallverbindung eines Alkali- oder Erdalkalimetalls oder eines Metalls der III. Hauptgruppe des Periodensystems

enthalten,
wobei als anorganischer Träger ein anorganisches Oxid verwendet wird, welches einen pH-Wert von 1 bis 6 und Hohlräume und Kanäle aufweist, deren makroskopischer Volumenanteil am Gesamtpartikel im Bereich von 5 bis 30 % liegt.

Außerdem wurde ein Verfahren zur Herstellung von Polymerisaten von $C_2$- bis $C_{12}$-Alk-1-enen gefunden, ferner die daraus erhaltenen Polymerisate sowie deren Verwendung als Fasern, Folien und Formkörper.

Das erfindungsgemäße Katalysatorsystem wird zur Polymerisation von $C_2$- bis $C_{12}$-Alk-1-enen eingesetzt. Als $C_2$- bis $C_{12}$-Alk-1-ene sind Ethylen, Propylen, But-1-en, Pent-1-en, 4-Methyl-pent-1-en, Hex-1-en, Hept-1-en oder Oct-1-en sowie Gemische aus diesen $C_2$- bis $C_{12}$-Alk-1-enen bevorzugt. Besonders bevorzugt sind Homooder Copolymerisate des Propylens und des Ethylens, wobei der Anteil an Ethylen oder an Propylen in den Copolymerisaten mindestens 50 mol-% beträgt. Bei den Copolymerisaten des Propylens sind diejenigen bevorzugt, die als weitere Monomere Ethylen oder But-1-en oder deren Mischungen enthalten. Bei den Copolymerisaten des Ethylens handelt

es sich insbesondere um solche Copolymerisate, die als weitere Monomere Propylen oder But-1-en oder Hex-1-en oder Oct-1-en oder deren Mischungen enthalten.

Vorzugsweise werden mit den erfindungsgemäßen Katalysatorsystemen solche Polymerisate hergestellt, die

| | |
|---|---|
| 50 bis 100 mol-% | Propylen, |
| 0 bis 50 mol-%, | insbesondere 0 bis 30 mol-% Ethylen und |
| 0 bis 20 mol-%, | insbesondere 0 bis 10 mol-% $C_4$- bis $C_{12}$-Alk-1-ene |

enthalten.

Bevorzugt sind auch solche Polymerisate, die

| | |
|---|---|
| 50 bis 100 mol-% | Ethylen, |
| 0 bis 50 mol-%, | insbesondere 0 bis 30 mol-% Propylen und |
| 0 bis 50 mol-%, | insbesondere 0 bis 30 mol-% $C_4$- bis $C_{12}$-Alk-1-ene |

aufweisen.

Die Summe der mol-% ergibt stets 100.

Die Polymerisation mit Hilfe der erfindungsgemäßen Katalysatorsysteme wird bei Temperaturen im Bereich von -50 bis 300°C, vorzugsweise im Bereich von 0 bis 150°C, und bei Drücken im Bereich von 0,5 bis 3000 bar, vorzugsweise im Bereich von 1 bis 80 bar, durchgeführt. Bei diesem ebenfalls erfindungsgemäßen Verfahren sollen die Verweilzeiten der jeweiligen Reaktionsgemische auf 0,5 bis 5 Stunden, insbesondere auf 0,7 bis 3,5 Stunden, eingestellt werden. Es können bei der Polymerisation u.a. auch Antistatika sowie Molmassenregler, beispielsweise Wasserstoff, mitverwendet werden.

Die Polymerisation kann in Lösung, in Suspension, in flüssigen Monomeren oder in der Gasphase durchgeführt werden. Bevorzugt erfolgt die Polymerisation in flüssigen Monomeren oder in der Gasphase, wobei die gerührte Gasphase bevorzugt ist.

Das ebenfalls erfindungsgemäße Verfahren kann sowohl kontinuierlich als auch diskontinuierlich durchgeführt werden. Geeignete Reaktoren sind u.a. kontinuierlich betriebene Rührkessel, wobei man gegebenenfalls auch eine Reihe von mehreren hintereinander geschalteten Rührkesseln verwenden kann (Reaktorkaskade).

Die erfindungsgemäßen Katalysatorsysteme enthalten als Komponente $A_{)}$ einen anorganischen Träger. Als anorganische Träger wird dabei ein anorganisches Oxid verwendet, welches einen pH-Wert, ermittelt nach S.R. Mörrison, "The Chemical Physics of Surfaces", Plenum Press, New York [1977], Seite 130ff, von 1 bis 6 und Hohlräume und Kanäle aufweist, deren makroskopischer Volumenanteil am Gesamtpartikel im Bereich von 5 bis 30 % liegt. Bevorzugt werden dabei insbesondere solche anorganischen Oxide eingesetzt, deren pH-Wert, d.h. deren negativer dekadischer Logarithmus der Protonenkonzentration, im Bereich von 2 bis 5,5 und insbesondere im Bereich von 2 bis 5 zu finden ist. Weiterhin werden als anorganische Träger insbesondere solche anorganischen Oxide verwendet, die Hohlräume und Kanäle aufweisen, deren makroskopischer Volumenanteil am Gesamtpartikel 8 bis 30 %, bevorzugt 10 bis 30 % und besonders bevorzugt 15 bis 25 %, beträgt.

Es werden als anorganische Träger insbesondere auch solche anorganischen Oxide verwendet, die einem mittleren Teilchendurchmesser von 5 bis 200 µm, insbesondere von 20 bis 90 µm, und einen mittleren Teilchendurchmesser der Primärpartikel von 1 bis 20 µm, insbesondere von 1 bis 5 µm, aufweisen. Bei den sogenannten Primärpartikeln handelt es sich dabei um poröse, granuläre Partikel. Die Primärpartikel weisen Poren mit einem Durchmesser von insbesondere 1 bis 1000 Å auf. Weiterhin sind die erfindungsgemäß zu verwendenden anorganischen Oxide u.a. auch noch dadurch charakterisiert, daß sie über Hohlräume und Kanäle mit einem mittleren Durchmesser von 0,1 bis 20 µm, insbesondere von 1 bis 15 µm, verfügen. Die anorganischen Oxide weisen ferner insbesondere noch ein Porenvolumen von 0,1 bis 10 $cm^3$/g, bevorzugt von 1,0 bis 5,0 $cm^3$/g, und eine spezifische Oberfläche von 10 bis 1000 $m^2$/g, bevorzugt von 100 bis 500 $m^2$/g, auf.

Aufgrund der in den feinteiligen anorganischen Oxiden vorhandenen Hohlräume und Kanäle liegt im Trägermaterial eine deutlich verbesserte Verteilung der Katalysatoraktivkomponenten vor. Die sauren Zentren auf der Oberfläche des anorganischen Oxids bewirken zusätzlich eine homogene Beladung mit den Katalysatorbestandteilen. Darüber hinaus wirkt sich ein derart mit Hohlräumen und Kanälen durchzogenes Material positiv auf die diffusionskontrollierte Versorgung mit Monomeren und Cokatalysatoren und damit auch auf die Polymerisationskinetik aus.

Ein solches feinteiliges anorganisches Oxid ist u.a. erhältlich durch Sprühtrocknen von vermahlenen, entsprechend gesiebten Hydrogelen, welche hierzu mit Wasser oder einem aliphatischen Alkohol vermaischt werden. Während der Sprühtrocknung kann der benötigte pH-Wert von 1 bis 6 auch durch die Verwendung entsprechend saurer Primärpartikelsuspensionen eingestellt werden. Ein solches feinteiliges anorganisches Oxid ist aber auch im Handel erhältlich.

Bevorzugte anorganische Träger sind insbesondere Oxide des Siliciums, des Aluminiums, des Titans oder eines der Metalle der I. bzw. der II. Hauptgruppe des Periodensystems. Als ganz bevorzugtes anorganisches Oxid wird neben Aluminiumoxid oder Magnesiumoxid oder einem Schichtsilikat auch Kieselgel ($SiO_2$) verwendet, wobei dieses insbesondere durch Sprühtrocknung erhalten werden kann.

Als Komponente $A_)$ können auch sogenannte Cogele, d.h. Gemische von mindestens zwei verschiedenen anorganischen Oxiden, eingesetzt werden.

Es werden vorzugsweise pro Gramm Träger, d.h. der Komponente $A_)$, 0,1 bis 10000 µmol, insbesondere 5 bis 200 µmol des Metallocenkomplexes, d.h. der Komponente $B_)$ eingesetzt.

Als Komponente $B_)$ enthält das erfindungsgemäße Katalysatorsystem mindestens einen oder mehrere Metallocenkomplexe. Als Metallocenkomplexe eigenen sich besonders solche der allgemeinen Formel IV

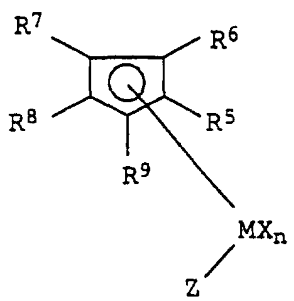

IV

in der die Substituenten folgende Bedeutung haben:

M Titan, Zirkonium, Hafnium, Vanadium, Niob oder Tantal, sowie Elemente der III. Nebengruppe des Periodensystems und der Lanthanoiden,

X Fluor, Chlor, Brom, Iod, Wasserstoff, $C_1$- bis $C_{10}$-Alkyl, $C_6$- bis $C_{15}$-Aryl, Alkylaryl mit 1 bis 10 C-Atomen im Alkylrest und 6 bis 20 C-Atomen im Arylrest, $-OR^{10}$ oder $-NR^{10}R^{11}$,

n eine ganze Zahl zwischen 1 und 3, wobei n der Wertigkeit von M minus der Zahl 2 entspricht,

wobei

$R^{10}$ und $R^{11}$ $C_1$- bis $C_{10}$-Alkyl, $C_6$- bis $C_{15}$-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten,

$R^5$ bis $R^9$ Wasserstoff, $C_1$- bis $C_{10}$-Alkyl, 5- bis 7gliedriges Cycloalkyl, das seinerseits ein $C_1$- bis $C_{10}$-Alkyl als Substituent tragen kann, $C_6$- bis $C_{15}$-Aryl oder Arylalkyl, wobei gegebenenfalls auch zwei benachbarte Reste gemeinsam für 4 bis 15 C-Atome aufweisende gesättigte oder ungesättigte cyclische Gruppen stehen können oder $Si(R^{12})_3$ mit

$R^{12}$ $C_1$- bis $C_{10}$-Alkyl, $C_3$- bis $C_{10}$-Cycloalkyl oder $C_6$- bis $C_{15}$-Aryl,

Z für X oder

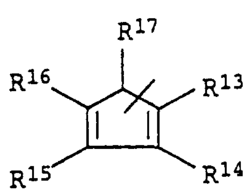

steht,

wobei die Reste

$R^{13}$ bis $R^{17}$ Wasserstoff, $C_1$- bis $C_{10}$-Alkyl, 5- bis 7gliedriges Cycloalkyl, das seinerseits ein $C_1$- bis $C_{10}$-Alkyl als Substituent tragen kann, $C_6$- bis $C_{15}$-Aryl oder Arylalkyl bedeuten und wobei gegebenenfalls auch zwei benachbarte Reste gemeinsam für 4 bis 15 C-Atome aufweisende gesättigte oder ungesättigte cyclische Gruppen stehen können, oder $Si(R^{18})_3$ mit

$R^{18}$ $C_1$- bis $C_{10}$-Alkyl, $C_6$- bis $C_{15}$-Aryl oder $C_3$- bis $C_{10}$-Cycloalkyl,

oder wobei die Reste $R^8$ und Z gemeinsam eine Gruppierung $-R^{19}$-Abilden, in der

$R^{19}$

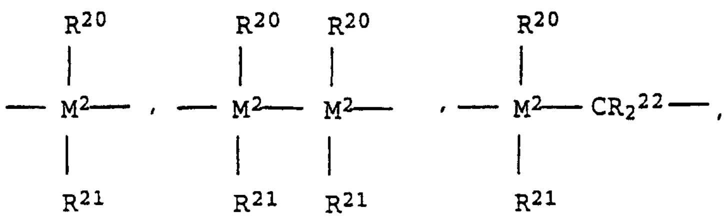

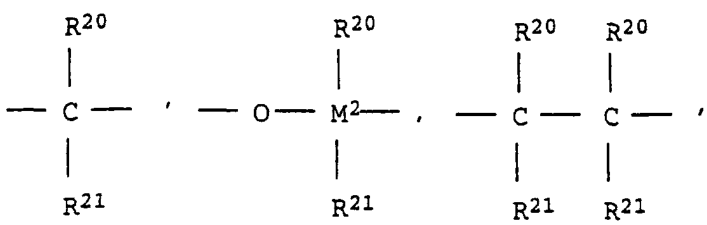

$= BR^{20}$, $= AlR^{20}$, -Ge-, -Sn-, -O-, -S-, = SO, $= SO_2$, $= NR^{20}$, = CO, $= PR^{20}$ oder $= P(O)R^{20}$ ist,

wobei

$R^{20}$, $R^{21}$ und $R^{22}$ gleich oder verschieden sind und ein Wasserstoffatom, ein Halogenatom, eine $C_1$-$C_{10}$-Alkylgruppe, eine $C_1$-$C_{10}$-Fluoralkylgruppe, eine $C_6$-$C_{10}$-Fluorarylgruppe, eine $C_6$-$C_{10}$-Arylgruppe, eine $C_1$-$C_{10}$-Alkoxygruppe, eine $C_2$-$C_{10}$-Alkenylgruppe, eine $C_7$-$C_{40}$-Arylalkylgruppe, eine $C_8$-$C_{40}$-Arylalkenylgruppe oder eine $C_7$-$C_{40}$-Alkylarylgruppe bedeuten oder wobei zwei benachbarte Reste jeweils mit den sie verbindenden Atomen einen Ring bilden, und

$M^2$ Silicium, Germanium oder Zinn ist,

A —O—, —S—,

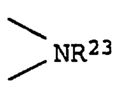
oder
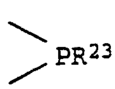

bedeuten, mit

$R^{23}$ $C_1$- bis $C_{10}$-Alkyl, $C_6$- bis $C_{15}$-Aryl, $C_3$- bis $C_{10}$-Cycloalkyl, Alkylaryl oder $Si(R^{24})_3$,

$R^{24}$ Wasserstoff, $C_1$- bis $C_{10}$-Alkyl, $C_6$- bis $C_{15}$-Aryl, das seinerseits mit $C_1$- bis $C_4$-Alkylgruppen substituiert sein kann oder $C_3$- bis $C_{10}$-Cycloalkyl

oder wobei die Reste $R^8$ und $R^{16}$ gemeinsam eine Gruppierung $-R^{19}$bilden.

Von den Metallocenkomplexen der allgemeinen Formel IV sind

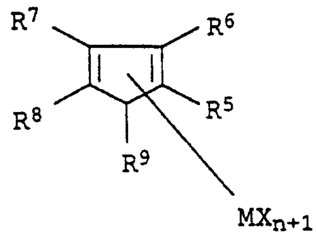

IVa,

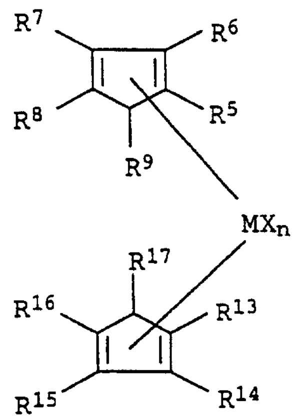

IVb,

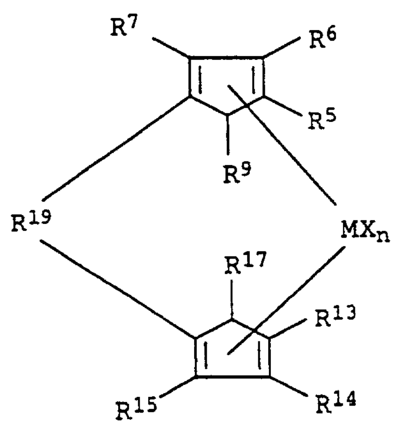

IVc

und

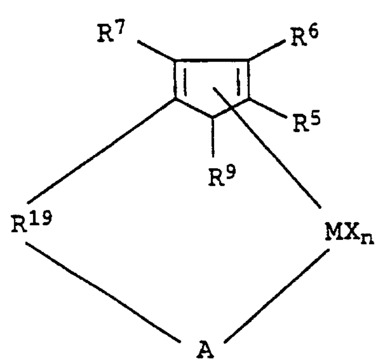

IVd

bevorzugt.

Die Reste X können gleich oder verschieden sein, bevorzugt sind sie gleich.

Von den Verbindungen der Formel IVa sind insbesondere diejenigen bevorzugt, in denen

M Titan, Zirkonium oder Hafnium,

X Chlor, $C_1$-bis $C_4$-Alkyl oder Phenyl,

n die Zahl 2 und

$R^5$ bis $R^9$ Wasserstoff oder $C_1$- bis $C_4$-Alkyl bedeuten.

Von den Verbindungen der Formel IVb sind als bevorzugt diejenigen zu nennen, bei denen

M für Titan, Zirkonium oder Hafnium steht,

X Chlor, $C_1$-bis $C_4$-Alkyl oder Phenyl,

n die Zahl 2,

$R^5$ bis $R^9$ Wasserstoff, $C_1$- bis $C_4$-Alkyl oder $Si(R^{12})_3$,

$R^{13}$ bis $R^{17}$ Wasserstoff, $C_1$- bis $C_4$-Alkyl oder $Si(R^{18})_3$ bedeuten.

Insbesondere sind die Verbindungen der Formel IVb geeignet, in denen die Cyclopentadienylreste gleich sind.

Beispiele für besonders geeignete Verbindungen sind u.a.: Bis(cyclopentadienyl)zirkoniumdichlorid, Bis(pentamethylcyclopentadienyl)-zirkoniumdichlorid, Bis(methylcyclopentadienyl)-zirkoniumdichlorid, Bis(ethylcyclopentadienyl)-zirkoniumdichlorid, Bis(n-butylcyclopentadienyl)-zirkoniumdichlorid und Bis(trimethylsilylcyclopentadienyl)-zirkoniumdichlorid sowie die entsprechenden Dimethylzirkoniumverbindungen.

Von den Verbindungen der Formel IVc sind diejenigen besonders geeignet, in denen

$R^5$ und $R^{13}$ gleich sind und für Wasserstoff oder $C_1$- bis $C_{10}$-Alkylgruppen stehen,

$R^9$ und $R^{17}$ gleich sind und für Wasserstoff, eine Methyl-, Ethyl-, iso-Propyl- oder tert.-Butylgruppe stehen,

$R^6$, $R^7$, $R^{14}$ und $R^{15}$ die Bedeutung $R^7$ und $R^{15}$ $C_1$- bis $C_4$-Alkyl $R^6$ und $R^{14}$ Wasserstoff haben oder zwei benachbarte Reste $R^6$ und $R^7$ sowie $R^{14}$ und $R^{15}$ gemeinsam für 4 bis 12 C-Atome aufweisende cyclische Gruppen stehen,

$R^{19}$ für

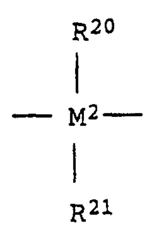

oder

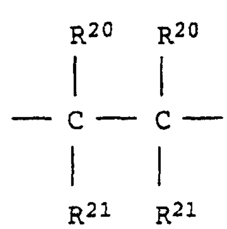

steht,

M für Titan, Zirkonium oder Hafnium und

X für Chlor, $C_1$- bis $C_4$-Alkyl oder Phenyl stehen.

Beispiele für besonders geeignete Komplexverbindungen sind u.a. Dimethylsilandiylbis(cyclopentadienyl)-zirkoniumdichlorid, Dimethylsilandiylbis(indenyl)-zirkoniumdichlorid, Dimethylsilandiylbis(tetrahydroindenyl)-zirkoniumdichlorid, Ethylenbis(cyclopentadienyl)-zirkoniumdichlorid, Ethylenbis(indenyl)-zirkoniumdichlorid, Ethylenbis(tetrahydroindenyl)-zirkoniumdichlorid, Tetramethylethylen-9-fluorenylcyclopentadienylzirkoniumdichlorid, Dimethylsilandiylbis(-3-tert.butyl-5-methylcyclopentadienyl)-zirkoniumdichlorid, Dimethylsilandiylbis(-3-tert.butyl-5-ethylcyclopentadienyl)-zirkoniumdichlorid, Dimethylsilandiylbis(-2-methylindenyl)-zirkoniumdichlorid, Dimethylsilandiylbis(-2-isopropylindenyl)-zirkoniumdichlorid, Dimethylsilandiylbis(-2-tert.butylindenyl)-zirkoniumdichlorid, Diethylsilandiylbis(-2-methylindenyl)-zirkoniumdibromid, Dimethylsilandiylbis(-3-methyl-5-methylcyclopentadienyl)-zirkoniumdichlorid, Dimethylsilandiylbis(-3-ethyl-5-isopropylcyclopentadienyl)-zirkoniumdichlorid, Dimethylsilandiylbis(-2-ethylindenyl)-zirkoniumdichlorid, Dimethylsilandiylbis(-2-methylbenzindenyl)-zirkoniumdichlorid Dimethylsilandiylbis(2-ethylbenzindenyl)zirkoniumdichlorid, Methylphenylsilandiylbis(2-ethylbenzindenyl)zirkoniumdichlorid, Methylphenylsilandiylbis(2-methylbenzindenyl)zirkoniumdichlorid, Diphenylsilandiylbis(2-methylbenzindenyl)zirkoniumdichlorid, Diphenylsilandiylbis(2-ethylbenzindenyl)zirkoniumdichlorid, und Diphenylsilandiylbis(-2-methylindenyl)-hafniumdichlorid sowie die entsprechenden Dimethylzirkoniumverbindungen.

Weitere Beispiele für geeignete Komplexverbindungen sind u.a. Dimethylsilandiylbis(-2-methyl-4-phenylindenyl)zirkoniumdichlorid, Dimethylsilandiylbis(-2-methyl-4-naphthylindenyl)zirkoniumdichlorid, Dimethylsilandiylbis(-2-methyl-4-isopropylindenyl)zirkoniumdichlorid und Dimethylsilandiylbis(-2-methyl-4,6-diisopropylindenyl)zirkoniumdichlorid sowie die entsprechenden Dimethylzirkoniumverbindungen.

Bei den Verbindungen der allgemeinen Formel IVd sind als besonders geeignet diejenigen zu nennen, in denen

M für Titan oder Zirkonium,

X für Chlor, $C_1$-bis $C_4$-Alkyl oder Phenyl stehen.

$R^{19}$ für

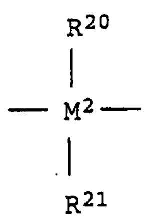 oder 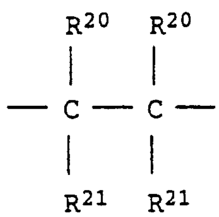

steht,

A für —O—, —S—,

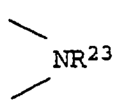

und

$R^5$ bis $R^7$ und $R^9$ für Wasserstoff, $C_1$- bis $C_{10}$-Alkyl, $C_3$- bis $C_{10}$-Cycloalkyl, $C_6$- bis $C_{15}$-Aryl oder $Si(R^{12})_3$ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, Vanadium, Niob oder Tantal, bevorzugt ist.

Beispiele für entsprechende Herstellungsverfahren sind u.a. im Journal of Organometallic Chemistry, 369 (1989), 359-370 beschrieben.

Es können auch Mischungen verschiedener Metallocenkomplexe eingesetzt werden.

Als Komponente C) enthält das erfindungsgemäße Katalysatorsystem eine metalloceniumionenbildende Verbindung.

Geeignete metalloceniumionenbildende Verbindungen sind starke, neutrale Lewissäuren, ionische Verbindungen mit lewissauren Kationen und ionische Verbindungen mit Brönsted-Säuren als Kation.

Als starke, neutrale Lewissäuren sind Verbindungen der allgemeinen Formel V

$$M^3X^1X^2X^3 \qquad V$$

bevorzugt, in der

$M^3$ ein Element der III. Hauptgruppe des Periodensystems bedeutet, insbesondere B, A1 oder Ga, vorzugsweise B,

$X^1$, $X^2$ und $X^3$ für wasserstoff, C1- bis C10-Alkyl, C6- bis C15-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel V, in der $X^1$, $X^2$ und $X^3$ gleich sind, vorzugsweise Tris(pentafluorphenyl)boran.

Als ionische Verbindungen mit lewissauren Kationen sind Verbindungen der allgemeinen Formel VI

$$[(Y^{a+})Q_1Q_2...Q_z]^{d+} \qquad VI$$

geeignet, in denen

Y ein Element der I. bis VI. Hauptgruppe oder der I. bis VIII. Nebengruppe des Periodensystems bedeutet,

$Q_1$ bis $Q_z$ für einfach negativ geladene Reste wie $C_1$- bis $C_{28}$-Alkyl, $C_6$- bis $C_{15}$-Aryl, Alkylaryl, Arylalkyl, Halogenalkyl, Halogenaryl mit jeweils 6 bis 20 C-Atomen im Aryl- und 1 bis 28 C-Atome im Alkylrest, $C_3$- bis $C_{10}$-Cycloalkyl, welches gegebenenfalls mit $C_1$- bis $C_{10}$-Alkylgruppen substituiert sein kann, Halogen, $C_1$- bis $C_{28}$-Alkoxy, $C_6$- bis $C_{15}$-Aryloxy, Silyl- oder Mercaptylgruppen

a für ganze Zahlen von 1 bis 6 und

z für ganze Zahlen von 0 bis 5 steht,

d der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Menge an metalloceniumionenbildenden Verbindungen beträgt bevorzugt 0,1 bis 10 Äquivalente, bezogen auf den Metallocenkomplex IV.

Besonders geeignet als metalloceniumionenbildende Verbindung C) sind offenkettige oder cyclische Alumoxanverbindungen der allgemeinen Formel II oder III

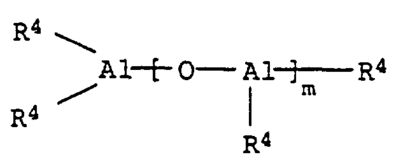

II

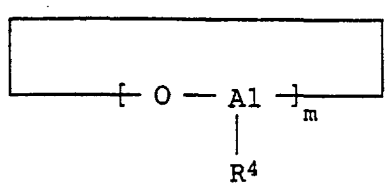

III

wobei

$R^4$ eine $C_1$- bis $C_4$-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A- 284 708 und der US A 4,794,096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Vorzugsweise werden sowohl die Metallocenkomplexe (Komponente B) als auch die metalloceniumionenbildende Verbindungen (Komponente $C_)$) in Lösung eingesetzt, wobei aromatische Kohlenwasserstoffe mit 6 bis 20 C-Atomen, insbesondere Xylole und Toluol, besonders bevorzugt sind.

Weiterhin können als Komponente $C_6$ Aryloxyalumoxane, wie in der US-A 5,391,793 beschrieben, Aminoaluminoxane, wie in der US-A 5,371,260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Es hat sich als vorteilhaft erwiesen, die Metallocenkomplexe und die oligomere Alumixanverbindung in solchen Mengen zu verwenden, daß das atomare Verhältnis zwischen Aluminium aus der oligomeren Alumoxanverbindung und dem Übergangsmetall aus den Metallocenkomplexen im Bereich von 10:1 bis $10^6$:1, insbesondere im Bereich von 10:1 bis $10^4$:1, liegt.

Das erfindungsgemäße Katalysatorsystem kann als Komponente $D_)$ gegebenenfalls noch eine Metallverbindung der allgemeinen Formel I

$$M^1 (R^1)_r (R^2)_s (R^3)_t \qquad \text{I}$$

in der

$M^1$ ein Alkali-, ein Erdalkalimetall oder ein Metall der III. Hauptgruppe des Periodensystems, d.h. Bor, Aluminium, Gallium, Indium oder Thallium bedeutet,

$R^1$ Wasserstoff, $C_1$- bis $C_{10}$-Alkyl, $C_6$- bis $C_{15}$-Aryl, Alkylaryl oder Arylalkyl mit jeweils 1 bis 10 C-Atom im Alkylrest und 6 bis 20 C-Atomen im Arylrest,

$R^2$ und $R^3$ Wasserstoff, Halogen, $C_1$- bis $C_{10}$-Alkyl, $C_6$- bis $C_{15}$-Aryl, Alkylaryl, Arylalkyl oder Alkoxy mit jeweils 1 bis 10 C-Atomen im Alkylrest und 6 bis 20 C-Atomen im Arylrest,

r eine ganze Zahl von 1 bis 3

und

s und t ganze Zahlen von 0 bis 2 bedeuten, wobei die Summe r+s+t der Wertigkeit von $M^1$ entspricht,

enthalten.

Von den Metallverbindungen der allgemeinen Formel I sind diejenigen bevorzugt, in denen

$M^1$ Lithium, Magnesium oder Aluminium bedeutet und

$R^1$ bis $R^3$ für $C_1$- bis $C_{10}$-Alkyl stehen.

Besonders bevorzugte Metallverbindungen der Formel I sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium.
Wenn die Komponente $D_)$ eingesetzt wird, ist sie bevorzugt in einer Menge von 800:1 bis 1:1, insbesondere 500:1 bis 50:1 (molares Verhältnis von $M^1$ aus I zu Übergangsmetall M aus IV) im Katalysatorsystem enthalten.
Die Komponenten $A_)$, $B_)$, $C_)$ und gegebenenfalls $D_)$ werden zusammen als erfindungsgemäßes Katalysatorsystem verwendet.
Üblicherweise sind die erfindungsgemäßen Katalysatorsysteme analog EP-A 294 942 erhältlich.
Ein bevorzugtes Herstellverfahren der erfindungsgemäßen Katalysatorsysteme zeichnet sich durch die Verfahrensschritte

a) Kontaktierung einer Lösung einer metalloceniumionenbildenden Verbindung mit einem zweiten Lösungsmittel, in welchem diese Verbindung nur wenig löslich ist, in Gegenwart des Trägermaterials,

b) Entfernung zumindest eines Teils der Lösungsmittel vom Trägermaterial und

c) Kontaktierung einer Lösung eines Gemisches einer metalloceniumionen-bildenden Verbindung und eines Übergangsmetallkomplexes mit einem zweiten Lösungsmittel, in welchem dieses Gemisch nur wenig löslich ist, in Gegenwart des nach a) und b) erhaltenen Trägermaterials,

aus.
Die erfindungsgemäßen Katalysatorsysteme eignen sich insbesondere zur Herstellung von Polymerisaten von $C_2$- bis $C_{12}$-Alk-1-enen, die sich u.a. durch eine enge Molmassenverteilung und sehr geringe xylollösliche Anteile auszeichnen. Aufgrund der sehr niedrigen xylollöslichen Anteile lassen sich die ebenfalls erfindungsgemäßen Polymerisate von $C_2$- bis $C_{12}$-Alk-1-enen insbesondere als Verpackungsmaterialien im Lebensmittelbereich einsetzen.
Das ebenfalls erfindungsgemäße Verfahren, in welchem die beschriebenen Katalysatorsysteme verwendet werden, ist u.a. durch einen relativ geringen verfahrenstechnischen Aufwand und durch eine hohe Produktivität gekennzeichnet. Die daraus erhaltenen Polymerisate von $C_2$- bis $C_{12}$-Alk-1-enen können insbesondere zu Fasern, Folien und Formkörper verarbeitet werden.

Beispiele

Vergleichsbeispiel A

I. Herstellung des Trägermaterials
20 g Kieselgel (Teilchendurchmesser: 20 bis 45 µm; spezifische Oberfläche: 280 $m^2$/g; Porenvolumen: 1,7 $cm^3$/g; Volumenanteile von Hohlräumen und Kanälen am Gesamtpartikel: 15 %; pH-Wert: 7,0) wurden im Vakuum 8 Stunden lang bei 180°C dehydratisiert, danach in 250 ml Toluol suspendiert und anschließend mit 160 ml 1,53 molares Methylalumoxan (Firma Witco) bei Raumtemperatur versetzt. Nach 12 Stunden wurde das mit Methylalumoxan desaktivierte Kieselgel abfiltriert, zweimal mit je 100 ml Toluol gewaschen und im Vakuum getrocknet. Die Ausbeute betrug 27,9 g mit Kieselgel geträgertes Methylalumoxan.

II. Trägerung des Katalysators
4,9 g des unter I. erhaltenen, mit Methylalumoxan desaktivierten Kieselgels wurden zu einer Mischung von 28 mg Bis-[3,3'-(-2-Methyl-benzo[e]indenyl)]dimethylsilandiylzirkoniumdichlorid, 6,3 ml 1,53 molare Methylalumoxanlösung (in Toluol, Firma Witco) und 22 ml Toluol langsam zugegeben. Nach 30 Minuten wurde das Lösungsmittel langsam und kontrolliert bis Raumtemperatur im Hochvakuum entfernt. Die Ausbeute am geträgerten Katalysator betrug 5,0 g.

III. Polymerisation von Propylen
In einem trockenen, mit Stickstoff gespülten 10-Liter-Autoklaven wurden nacheinander 50 g Polypropylengrieß und 10 ml Triisobutylaluminium (2 molar in einer Heptanlösung) gegeben und 15 Minuten lang gerührt. Anschließend befüllte man den Reaktor im Stickstoffgegenstrom mit 670 mg des in II. erhaltenen geträgerten Katalysators. Der Reaktor wurde zunächst wieder verschlossen und danach erneut bei einer Rührdrehzahl von 350 Umdrehungen/Minute bei Raumtemperatur mit 1,5 1 flüssigem Propylen befüllt. Nach 30 Minuten Vorpolymerisation wurde zunächst die Temperatur auf 65°C erhöht, wobei der Reaktorinnendruck stufenweise durch automatische Druckregelung bis zu einem Enddruck von 25 bar erhöht wurde. Anschließend wurde 90 Minuten lang bei automatischer

Propylengasregelung (25 bar) in der Gasphase bei 65°C polymerisiert. Nach beendeter Polymerisation wurde 10 Minuten lang auf Atmosphärendruck entspannt und das entstandene Polymerisat im Stickstoffstrom ausgetragen. Man erhielt 340 g Polypropylengrieß, was einer Produktivität von 650 g Polypropylen/g Katalysator/Stunde entspricht. Die zugehörigen Daten des Polymerisats sind in der nachfolgenden Tabelle 1 aufgelistet.

Die Bestimmung des Teilchendurchmesser des Trägers erfolgte durch Coulter-Counter-Analyse (Korngrößenverteilung der Trägerpartikel), die des Porenvolumens und der spezifischen Oberfläche durch Stickstoff-Absorption nach DIN 66 131 oder durch Quecksilber-Porosimetrie nach DIN 66 133. Die Bestimmung der mittleren Teilchengröße der Primärpartikel, des Durchmessers der Hohlräume und Kanäle sowie deren makroskopischer Volumenanteil geschah mit der Hilfe der Scanning Electron Mikroscopy (Rasterelektronenmikroskopie) bzw. der Electron Probe Micro Analysis (Elektronenstrahl-Mikrobereichsanalyse) jeweils an Kornoberflächen und an Kornquerschnitten des Trägers. Der pH-Wert des Trägers wurde nach S.R. Morrison "The Chemical Physics of Surfaces", Plenum Press, New York [1977], Seite 130ff, ermittelt.

Vergleichsbeispiel B

Es wurde analog zum Vergleichsbeispiel A verfahren, jedoch wurde der geträgerte Katalysator auf Basis eines granulären, sauren Kieselgels (Teilchendurchmesser: 20 bis 45 µm; spezifische Oberfläche: 320 $m^2$/g; Porenvolumen: 1,75 $cm^3$/g; Volumenanteile von Hohlräumen und Kanälen im Gesamtpartikel: < 5 %; pH-Wert: 5,5) hergestellt. 830 mg geträgerter Katalysator lieferten bei der Polymerisation von Propylen 1360 g Polymergrieß, was einer Produktivität von 1050 g PP/g Katalysator/Stunde entspricht. Die zugehörigen Polymerdaten sind in Tabelle 1 aufgelistet.

Beispiel 1

Es wurde analog zum Vergleichsbeispiel A verfahren, jedoch wurde der geträgerte Katalysator auf Basis eines sauren Kieselgels mit einem erhöhten Volumenanteil an Hohlräumen und Kanälen (Teilchendurchmesser: 20 bis 45 µm; spezifische Oberfläche: 325 $m^2$/g; Porenvolumen: 1,50 $cm^3$/g; Volumenanteil an Hohlräumen und Kanälen im Gesamtpartikel: 15 %; pH-Wert: 5,5) hergestellt. 445 mg geträgerter Katalysator lieferten bei der Polymerisation von Propylen 1500 g Polymergrieß, was einer Produktivität von 2200 g PP/g Katalysator/Stunde entspricht. Die zugehörigen Polymerdaten sind in Tabelle 1 aufgelistet.

Beispiel 2

Es wurde analog zum Vergleichsbeispiel A verfahren, jedoch wurde der geträgerte Katalysator auf Basis eines sauren Kieselgels (Teilchendurchmesser: 20 bis 45 µm; spezifische Oberfläche: 325 $m^2$/g; Porenvolumen: 1,50 $cm^3$/g; Volumenanteil an Hohlräumen und Kanälen im Gesamtpartikel: 15 %, pH-Wert: 5,0) hergestellt. 445 mg geträgerter Katalysator lieferten bei der Polymerisation von Propylen 1655 g Polymergrieß, was einer Produktivität von 2400 g PP/g Katalysator/Stunde entspricht. Die zugehörigen Polymerdaten sind in Tabelle 1 aufgelistet.

Beispiel 3

Es wurde analog zum Vergleichsbeispiel A verfahren, jedoch wurde der geträgerte Katalysator auf Basis eines sauren Kieselgels (Teilchendurchmesser: 20 bis 45 µm; spezifische Oberfläche: 310 $m^2$/g; Porenvolumen: 1,60 $cm^3$/g; Volumenanteil an Hohlräumen und Kanälen im Gesamtpartikel: 15 %; pH-Wert: 4,5) hergestellt. 410 mg geträgerter Katalysator lieferten bei der Polymerisation von Propylen 1620 g Polymergrieß, was einer Produktivität von 2550 g PP/g Katalysator/Stunde entspricht. Die zugehörigen Polymerdaten sind in Tabelle 1 aufgelistet.

Beispiel 4

Es wurde analog zum Vergleichsbeispiel A verfahren, jedoch wurde der geträgerte Katalysator auf Basis eines sauren Kieselgels (Teilchendurchmesser: 20 bis 45 µm, spezifische Oberfläche: 315 $m^2$/g; Porenvolumen: 1,50 $cm^3$/g; Volumenanteil an Hohlräumen und Kanälen im Gesamtpartikel: 8 %; pH-Wert: 5,0) hergestellt. 565 mg geträgerter Katalysator lieferten bei der Polymerisation von Propylen 1580 g Polymergrieß, was einer Produktivität von 1580 g PP/g Katalysator/Stunde entspricht. Die zugehörigen Polymerdaten sind in Tabelle 1 aufgelistet.

Beispiel 5

Es wurde analog zum Vergleichsbeispiel A verfahren, jedoch wurde der geträgerte Katalysator auf Basis

eines sauren Kieselgels (Teilchendurchmesser: 20 bis 45 µm, spezifische Oberfläche: 325 $m^2/g$; Porenvolumen: 1,50 $cm^3/g$; Volumenanteil an Hohlräumen und Kanälen im Gesamtpartikel: 24 %; pH-Wert: 5,0) hergestellt. 395 mg geträgerter Katalysator lieferten bei der Polymerisation von Propylen 1650 g Polymergrieß, was einer Produktivität von 2700 g PP/g Katalysator/Stunde entspricht. Die zugehörigen Polymerdaten sind in Tabelle 1 aufgelistet.

Vergleichsbeispiel C

I. Herstellung des Trägermaterials

12,1 g Kieselgel (Teilchendurchmesser: 20 bis 45 µm; spezifische Oberfläche: 280 $m^2/g$; Porenvolumen: 1,56 $cm^3/g$; Volumenanteil an Hohlräumen und Kanälen im Gesamtpartikel: 15 %; pH-Wert: 7,0) wurden in 90 ml Heptan suspendiert und auf 20°C thermostatisiert. Innerhalb von 90 Minuten wurden 33,9 ml einer 1 molaren Lösung von Trimethylaluminium (TMA) in Heptan zugegeben, wobei eine Temperatur von 40°C nicht überschritten wurde. Nach Beendigung der TMA-Zugabe wurde weitere 4 Stunden lang gerührt. Die Suspension wurde abfiltriert und zweimal mit je 20 ml Heptan gewaschen. Nach dem Trocknen bei 50°C verblieb der modifizierte Träger als rieselfähiges Pulver.

II. Trägerung des Katalysators

Zu einer Lösung von 131,3 mg Bis(n-butylcyclopentadienyl)-zirkoniumdichlorid in 56 ml 1,53 molarer Methylalumoxan-Lösung in Toluol wurde bei 20°C nach 20minütigem Rühren 12,6 g des nach I. modifizierten Trägers gegeben und weitere 45 Minuten lang gerührt. Danach wurde abfiltriert und anschließend zweimal mit Heptan gewaschen. Nach der Trocknung bei 50°C erhielt man 15,1 g des geträgerten Katalysators als rieselfähiges Pulver.

III. Polymerisation von Ethylen

In einen gerührten 10-Liter-Stahlautoklaven wurden nach sorgfältigem Spülen mit Stickstoff und Temperieren auf die Polymerisationstemperatur von 70°C 4,5 Liter iso-Butan und 80 mg/Liter n-Butyl-Lithium vorgelegt. Dann wurden 365 mg des aus II. erhaltenen geträgerten Katalysators mit weiteren 0,5 Liter iso-Butan eingespült und Ethylen auf einen Gesamtdruck von 38 bar aufgepreßt. Der Druck im Autoklaven wurde durch Nachdosierung von Ethylen konstant gehalten. Nach 90 Minuten wurde die Polymerisation durch Entspannen des Autoklaven abgebrochen. Es fielen 1660 g Polymerisat in Form eines gut rieselfähigen Grießes an. Die entsprechenden Polymerisationsergebnisse sind in Tabelle 2 aufgelistet.

Beispiel 6

Es wurde analog zum Vergleichsbeispiel C verfahren, jedoch wurde der geträgerte Katalysator auf Basis eines sauren Kieselgels (Teilchendurchmesser: 20 bis 45 µm; spezifische Oberfläche: 325 $m^2/g$; Porenvolumen: 1,50 $cm^3/g$; Volumenanteil an Hohlräumen und Kanälen im Gesamtpartikel: 15 %; pH-Wert: 5,5) hergestellt. 265 mg geträgerter Katalysator lieferten bei der Polymerisation von Ethylen 1600 g Polymergrieß, was einer Produktivität von 4000 g Polyethylen (PE)/g Katalysator/Stunde entspricht. Die zugehörigen Polymerdaten sind in Tabelle 2 aufgelistet.

Beispiel 7

Es wurde analog zum Vergleichsbeispiel C verfahren, jedoch wurde der geträgerte Katalysator auf Basis eines sauren Kieselgels (Teilchendurchmesser: 20 bis 45 µm; spezifische Oberfläche: 305 $m^2/g$; Porenvolumen: 1,48 $cm^3/g$; Volumenanteil an Hohlräumen und Kanälen im Gesamtpartikel: 15 %; pH-Wert: 5,5) hergestellt. 215 mg geträgerter Katalysator lieferten bei der Polymerisation von Ethylen 1500 g Polymergrieß, was einer Produktivität von 4600 g PE/g Katalysator/Stunde entspricht. Die zugehörigen Polymerdaten sind in Tabelle 2 aufgelistet.

Vergleichsbeispiel D

Es wurde analog zum Vergleichsbeispiel C verfahren, jedoch wurde der geträgerte Katalysator auf Basis eines granulären Kieselgels (Teilchendurchmesser: 50 µm; spezifische Oberfläche: 320 $m^2/g$; Porenvolumen: 1,75 $cm^3/g$; Volumenanteil an Hohlräumen und Kanälen im Gesamtpartikel: < 5 %,; pH-Wert: 5,5) hergestellt. 440 mg geträgerter Katalysator lieferten bei der Polymerisation von Ethylen 1440 g Polymergrieß, was einer Produktivität von 2150 g PE/g Katalysator/Stunde entspricht. Die zugehörigen Polymerdaten sind in Tabelle 2 aufgelistet.

Vergleichsbeispiel E

I. Trägerung des Katalysators

5 g Aluminiumoxid mit einem pH-Wert von 7,5, einem Volumenanteil an Hohlräumen und Kanälen im Gesamtpartikel von < 1,0 % und einem Aktivitätswert von 1 wurden langsam zu einer 1,53 molaren Lösung von Methylalumoxan (Firma Witco) in 80 ml Toluol bei 0°C zugegeben. Nach 12 Stunden wurde das Aluminiumoxid abfiltriert, zweimal mit je 100 ml Toluol gewaschen und direkt zu einer Mischung von 28,5 mg Bis-[3,3'-(2-methylbenzo[e]indenyl)]-dimethylsilandiylzirkoniumdichlorid, 6,5 ml einer 1,53 molaren Lösung von Methylalumoxan in Toluol und 25 ml Toluol langsam hinzugegeben. Nach 30 Minuten wurde das Lösungsmittel langsam und kontrolliert bei Raumtemperatur im Hochvakuum entfernt. Man erhielt 5,1 g eines rieselfähigen Pulvers als geträgerter Katalysator.

II. Polymerisation von Propylen

In einem trockenen, mit Stickstoff gespülten 10-Liter-Autoklaven wurden 50 g Polypropylengrieß vorgelegt. Anschließend wurden nacheinander 4 Liter flüssiges Propylen, 10 ml Triisobutylaluminium (2 molar in Heptan) und 975 mg Katalysator (nach I. erhalten) über eine Schleuse in den Reaktor gegeben. Bei einer Rührerdrehzahl von 350 Umdrehungen/Minute wurde bei Raumtemperatur der Autoklav mit weiteren 3 Liter Propylen befüllt. Anschließend wurde schrittweise die Temperatur auf 65°C erhöht, wobei sich der Innendruck auf 26 bar einstellte. Es wurde 90 Minuten lang 65°C polymerisiert. Nach beendeter Polymerisation wurde 10 Minuten lang auf Atmosphärendruck entspannt und das Polymerisat im Stickstoffatom ausgetragen. Man erhielt 255 g Polypropylen, was einer Produktivität von 140 g PP/g Katalysator/Stunde entspricht.

Beispiel 8

Es wurde analog zum Vergleichsbeispiel E verfahren, jedoch wurde der Katalysator auf Basis eines sauren Aluminiumoxids (pH = 4,5; Aktivität: 1, Volumenanteil an Hohlräumen und Kanälen im Gesamtpartikel von 15 %) hergestellt. 945 mg geträgerter Katalysator lieferten bei der Polymerisation von Propylen 1050 g Polymergrieß, was einer Produktivität von 700 g PP/Katalysator/Stunde entspricht.

Vergleichsbeispiel F

I. Herstellung des Trägermaterials

250 g Kieselgel (bei 140°C für 7 Stunden im Vakuum ausgeheizt) wurden in 2000 ml Heptan suspendiert und mit 350 ml einer 2 molaren Lösung von Triisobutylaluminium in Heptan versetzt. Das Kieselgel wurde abfiltriert, mit Heptan gewaschen und im Vakuum getrocknet. Man erhielt den vorbehandelten Träger als rieselfähiges Pulver. Dieser wies einen Teilchendurchmesser von 20 bis 45 µm, eine spezifische Oberfläche von 320 $m^2$/g, ein Porenvolumen von 1,75 $cm^3$/g, Volumenanteil von Hohlräumen und Kanälen am Gesamtpartikel von < 5,0 % und einen pH-Wert von 7,0 auf.

II. Trägerung des Katalysators

Eine Suspension von 0,5 mmol Dicyclopentadienylzirkondichlorid, 0,5 mmol N,N-Dimethylanilinium-tetrakispentafluorophenylborat und 5 g nach I. vorbehandeltes Kieselgels in 50 ml Toluol wurde auf 80°C erhitzt und 30 Minuten bei dieser Temperatur gerührt. Dann wurde das Toluol im Vakuum abdestilliert und man erhielt den geträgerten Katalysator als rieselfähiges Pulver.

III. Polymerisation von Ethylen

In einen gerührten 10-Liter-Stahlautoklaven wurden nach sorgfältigem Spülen mit Stickstoff und Temperieren auf die Polymerisationstemperatur von 70°C 4,5 Liter iso-Butan und 150 mg Butyl-heptyl-magnesium vorgelegt. Dann wurde 280 mg des nach II. geträgerten Katalysators mit weiteren 0,5 Liter iso-Butan eingespült und Ethylen auf einen Gesamtdruck von 38 bar aufgepreßt. Der Druck im Autoklaven wurde durch Nachdosierung von Ethylen konstant gehalten. Nach 90 Minuten wurde die Polymerisation durch Entspannen des Autoklaven abgebrochen. 160 g Polymerisat fiel in Form eines gut rieselfähigen Grießes an, was einer Produktivität von 370 g PE/g Katalysator/Stunde entspricht. Die zugehörigen Polymerdaten sind in Tabelle 3 aufgelistet.

Beispiel 9

Es wurde analog zum Vergleichsbeispiel F verfahren, jedoch wurde der geträgerte Katalysator auf Basis eines sprühgetrockneten Kieselgels (Teilchendurchmesser: 20 bis 45 µm; spezifische Oberfläche: 325 $m^2/g$; Porenvolumen: 1,50 $cm^3/g$; Volumenanteil an Hohlräumen und Kanälen im Gesamtpartikel: 15 %; pH-Wert: 5,5) hergestellt. 68 mg geträgerter Katalysator lieferten bei der Polymerisation von Ethylen 200 g Polymergrieß, was einer Produktivität von 2000 g PE/g Katalysator/Stunde entspricht. Die zugehörigen Polymerdaten sind in Tabelle 3 aufgelistet.

Vergleichsbeispiel G

Es wurde analog zum Vergleichsbeispiel F verfahren, der geträgerte Katalysator wurde auf Basis eines granulären Kieselgels (Teilchendurchmesser: 20 bis 45 µm; spezifische Oberfläche: 320 $m^2/g$; Porenvolumen: 1,75 $cm^3/g$; Volumenanteil an Hohlräumen und Kanälen im Gesamtpartikel: < 5 %; pH-Wert: 7,0) hergestellt, als Metallocenkomponente wurde jedoch Di-n-butylcyclopentadienylzirkondichlorid verwendet. 66 mg geträgerter Katalysator lieferten bei der Polymerisation von Ethylen 255 g Polymergrieß, was einer Produktivität von 2560 g PE/g Katalysator/Stunde entspricht. Die zugehörigen Polymerdaten sind in Tabelle 3 aufgelistet.

Beispiel 10

Es wurde analog zum Vergleichsbeispiel F verfahren, der geträgerte Katalysator wurde auf Basis eines sprühgetrockneten Kieselgels (Teilchendurchmesser: 20 bis 45 µm; spezifische Oberfläche: 325 $m^2/g$; Porenvolumen: 1,50 $cm^3/g$; Volumenanteil an Hohlräumen und Kanälen im Gesamtpartikel: 15 %; pH-Wert: 5,5) hergestellt, als Metallocenkomponente wurde jedoch Di-n-butylcyclopentadienylzirkondichlorid verwendet. 81 mg geträgerter Katalysator lieferten bei der Polymerisation von Ethylen 420 g Polymergrieß, was einer Produktivität von 3500 g PE/g Katalysator/Stunde entspricht. Die zugehörigen Polymerdaten sind in Tabelle 3 aufgelistet.

Vergleichsbeispiel H

Es wurde analog zum Vergleichsbeispiel F verfahren, der geträgerte Katalysator wurde auf Basis eines granulären Kieselgels (Teilchendurchmesser: 20 bis 45 µm; spezifische Oberfläche: 320 $m^2/g$; Porenvolumen: 1,75 $cm^3/g$; Volumenanteil an Hohlräumen und Kanälen im Gesamtpartikel: < 5 %; pH-Wert: 7,0) hergestellt, als Metallocenkomponente wurde jedoch Dimethylsilylbis-(1-indenyl)zirkondichlorid verwendet. 75 mg geträgerter Katalysator lieferten bei der Polymerisation von Ethylen 195 g Polymergrieß, was einer Produktivität von 1700 g PE/g Katalysator/Stunde entspricht. Die zugehörigen Polymerdaten sind in Tabelle 3 aufgelistet.

Beispiel 11

Es wurde analog zum Vergleichsbeispiel F verfahren, der geträgerte Katalysator wurde auf Basis eines sprühgetrockneten Kieselgels (Teilchendurchmesser: 20 bis 45 µm; spezifische Oberfläche: 325 $m^2/g$; Porenvolumen: 1,50 $cm^3/g$; Volumenanteil an Hohlräumen und Kanälen im Gesamtpartikel: 15 %; pH-Wert: 5,5) hergestellt, als Metallocenkomponente wurde jedoch Dimethylsilylbis-(1-indenyl)zirkondichlorid verwendet. 72 mg geträgerter Katalysator lieferten bei der Polymerisation von Ethylen 240 g Polymergrieß, was einer Produktivität von 2200 g PE/g Katalysator/Stunde entspricht. Die zugehörigen Polymerdaten sind in Tabelle 3 aufgelistet.

Tabelle 1

| | Vergleichs-beispiel A | Vergleichs-beispiel B | Beispiel 1 | Beispiel 2 | Beispiel 3 | Beispiel 4 | Beispiel 5 |
|---|---|---|---|---|---|---|---|
| Produktivität [g Polymer/g Katalysator/Stunde] | 650 | 1050 | 2200 | 2400 | 2550 | 1800 | 2700 |
| Xylollöslicher Anteil *) [Gew.-%] | 0,5 | 0,4 | 0,3 | 0,3 | 0,5 | 0,4 | 0,3 |
| Schmelzflußindex **) [g/10 min] | 5,9 | 4,7 | 4,8 | 4,2 | 6,0 | 4,8 | 4,9 |
| Volumenanteil an Hohlräumen und Kanälen innerhalb der Gesamtpartikel [%] | 15 | <5 | 15 | 15 | 15 | 8 | 24 |
| pH-Wert des anorganischen Oxids | 7,0 | 5,5 | 5,5 | 5,0 | 4,5 | 5,0 | 5,0 |
| Molmassenverteilung [$M_w/M_n$] ***) | 2,1 | 2,1 | 1,8 | 1,9 | 1,9 | 1,8 | 1,8 |

*) ermittelt nach DIN ISO 1873

**) nach DIN ISO 1133, bzw. ASTM D 1238, bei 230°C und 2,16 kg

***) ermittelt durch Gelchromatographie

Tabelle 2

| | Vergleichsbeispiel C | Beispiel 6 | Beispiel 7 | Vergleichsbeispiel D | Vergleichsbeispiel E | Beispiel 8 |
|---|---|---|---|---|---|---|
| Produktivität [g Polymer/g Katalysator/Stunde] | 3050 | 4000 | 4600 | 2150 | 140 | 700 |
| Volumenanteil an Hohlräumen und Kanälen innerhalb der Gesamtpartikel [%] | 15 | 15 | 15 | <5 | <1,0 | 15 |
| Viskosität [η] *) | 3,69 | 3,73 | 3,82 | 3,79 | | |
| pH-Wert des anorganischen Trägers | 7,0 | 5,5 | 5,5 | 5,5 | 7,5 | 4,5 |
| Molmassenverteilung [$M_{w/Mn}$] **) | 2,3 | 1,9 | 2,0 | 2,3 | 2,3 | 2,0 |

*) ermittelt nach DIN ISO 1628-3

**) ermittelt durch Gelchromatographie

Tabelle 3

| | Vergleichs-beispiel F | Beispiel 9 | Vergleichs-beispiel G | Beispiel 10 | Vergleichs-beispiel H | Beispiel 11 |
|---|---|---|---|---|---|---|
| Produktivität [g Polymer/g Katalysator/Stunde] | 370 | 2000 | 2560 | 3500 | 1700 | 2200 |
| Viskosität [η] *) | 4,34 | 4,04 | 4,20 | 4,03 | 3,54 | 3,82 |
| Volumenanteil an Hohlräumen und Kanälen innerhalb der Gesamtpartikel [%] | <5 | 15 | <5 | 15 | <5 | 15 |
| pH-Wert des anorganischen Trägers | 7,0 | 5,5 | 7,0 | 5,5 | 7,0 | 5,5 |
| Molmassenverteilung [$M_w/M_n$] **) | 2,3 | 1,9 | 2,2 | 1,9 | 2,3 | 2,0 |

*) ermittelt nach *DIN ISO* 1628-3

**) ermittelt durch Gelchromatographie

Aus Tabelle 1 geht u.a. hervor, daß die Verwendung eines anorganischen Trägers mit einem pH-Wert von 1 bis 6 und einem makroskopischen Volumenanteil von Hohlräumen und Kanälen am Gesamtpartikel von 5 bis 30 % gemäß den erfindungsgemäßen Beispielen 1 bis 5 im Gegensatz zu den Vergleichsbeispielen A und B zu Polymerisaten mit verringerten xylollöslichen Anteilen führt. Darüber hinaus zeichnen sich die erfindungsgemäßen Beispiele 1 bis 11 durch eine deutlich erhöhte Produktivität aus.

Vergleichsbeispiel I

I. Herstellung des Trägermaterials

100 g granuläres Kieselgel (Teilchendurchmesser 20 bis 45 µm; spezifische Oberfläche 320 $m^2$/g; Porenvolumen 1,75 $cm^3$/g; Kanäle im Gesamtpartikel <5 %; pH-Wert 5,5) wurden im Vakuum 8 Stunden lang bei 180°C dehydratisiert, danach in 450 ml Toluol suspendiert und anschließend mit 775 ml 1,53 molares Methylalumoxan (in Toluol, Fa. Witco) bei Raumtemperatur versetzt. Nach 12 Stunden wurde das mit Methylalumoxan desaktivierte Kieselgel mit 750 ml iso-Dodekan versetzt und weitere 1,5 Stunden bei Raumtemperatur gerührt. Anschließend wurde das Trägermaterial abfiltriert, zweimal mit je 150 ml Toluol und zweimal mit je 150 ml Pentan gewaschen und im Stickstoffwirbelstrom getrocknet. Die Ausbeute an Methylalumoxan desaktiviertem Kieselgel betrug 146 g.

II. Trägerung des Katalysators

146 g des unter I. erhaltenen, mit Methylalumoxan desaktivierten Kieselgels wurden zu einer Mischung aus 5,25 g Bis-[3,3'-(-2-Methyl-benzo[e]indenyl)]dimethylsilandiylzirkoniumdichlorid, und 1,2 1 1,53 molarer Methylalumoxanlösung (in Toluol, Fa. Witco) zugegeben und bei Raumtemperatur gerührt. Nach 20 Stunden wurde innerhalb von 4 Stunden 2,5 1 iso-Dodekan langsam und kontrolliert zugegeben und weitere 1,5 Stunden bei Raumtemperatur gerührt. Anschließend wurde der Feststoffgehalt abfiltriert, mit je 150 ml Pentan gewaschen und im Stickstoffwirbelstrom getrocknet. Die Ausbeute am geträgerten Katalysator betrug 154 g. Si-Gehalt des Katalysators: 25,42 Gew.-%.

Vergleichsbeispiele J bis L

Polymerisation im kontinuierlichen 200 1-Gasphasenreaktor

Die Polymerisationen wurden in einem vertikal durchmischten Gasphasenreaktor mit einem Nutzvolumen von 200 1 durchgeführt. Der Reaktor enthielt ein bewegtes Festbett aus feinteiligem Polymerisat. Der Reaktorausstoß betrug in allen Fällen 20 kg Polypropylen pro Stunde. Die Polymerisationsergebnisse der Vergleichsbeispiele J, K und L sind in Tabelle 4 aufgelistet.

Vergleichsbeispiel J

In den Gasphasenreaktor wurde bei einem Druck von 24 bar und einer Temperatur von 60°C flüssiges Propylen entspannt. Die Dosierung des Katalysators aus Vergleichsbeispiel I erfolgte zusammen mit dem zur Druckregelung zugesetzten Propylen. Die zudosierte Katalysatormenge wurde so bemessen, daß der mittlere Ausstoß von 20 kg/h aufrecht erhalten wurde. Ebenfalls zudosiert wurde Triisobutylaluminium (TIBA) in einer Menge von 30 mmol/h als 1 molare Lösung in Heptan. Durch kurzzeitiges Entspannen des Reaktors über ein Tauchrohr wurde sukzessive Polymer aus dem Reaktor entfernt. Die Berechnung der Produktivität erfolgte aus dem Siliciumgehalt des Polymeren nach der folgenden Formel:

$$P = \text{Si-Gehalt des Katalysators/Si-Gehalt des Produkts}$$

Die verfahrenstechnischen Parameter und charakteristischen Produkteigenschaften gehen aus der Tabelle 4 hervor.

Vergleichsbeispiel K

Vergleichsbeispiel J wurde wiederholt mit dem Unterschied, daß als Molekulargewichtsregler Wasserstoff eingesetzt wurde. Die Wasserstoffkonzentration im Reaktionsgas wurde gaschromatographisch ermittelt. Die verfahrenstechnischen Parameter und charakteristischen Produkteigenschaften gehen aus der Tabelle 4 hervor.

Vergleichsbeispiel L

Vergleichsbeispiel J wurde wiederholt mit dem Unterschied, daß 1-Buten als Comonomeres in den Reaktor zudosiert wurde. Die Butenkonzentration im Reaktionsgas wurde gaschromatographisch ermittelt. Die verfahrenstechnischen Parameter und chrakteristischen Produkteigenschaften gehen aus der Tabelle 4 hervor.

Beispiel 12

I. Herstellung des Trägermaterials

100 g Kieselgel (Teilchendurchmesser 20 bis 45 µm; spezifische Oberfläche 325 $m^2$/g; Porenvolumen 1,50 $cm^3$/g; Kanäle im Gesamtpartikel 15 %; pH-Wert 5,0) wurden im Vakuum 8 Stunden lang bei 180°C dehydratisiert, danach in 450 ml Toluol suspendiert und anschließend mit 775 ml 1,53 molares Methylalumoxan (in Toluol, Fa. Witco) bei Raumtemperatur vesetzt. Nach 12 Stunden wurde das mit Methylalumoxan desaktivierte Kieselgel in 750 ml iso-Dodekan versetzt und weitere 1,5 Stunden bei Raumtemperatur gerührt. Anschließend wurde das Trägermaterial abfiltriert, zweimal mit je 150 ml Toluol und zweimal mit je 150 ml Pentan gewaschen und im Stickstoffwirbelstrom getrocknet. Die Ausbeute an Methylalumoxan desaktiviertem Kieselgel betrug 159 g.

II. Trägerung des Katalysators

159 g des unter I. erhaltenen, mit Methylalumoxan desaktivierten Kieselgels wurden zu einer Mischung aus 5,25 g Bis-[3,3'-(-2-Methyl-benzo[e]indenyl)]dimethylsilandiylzirkoniumdichlorid, und 1,2 1 1,53 molarer Methylalumoxanlösung (in Toluol, Fa. Witco) zugegeben und bei Raumtemperatur gerührt. Nach 20 Stunden wurde innerhalb von 4 Stunden 2,5 1 iso-Dodekan langsam und kontrolliert zugegeben und weitere 1,5 Stunden bei Raumtemperatur gerührt. Anschließend wurde der Feststoffgehalt abfiltriert, mit je 150 ml Pentan gewaschen und im Stickstoffwirbelstrom getrocknet. Die Ausbeute am geträgerten Katalysator betrug 165 g. Si-Gehalt des Katalysators: 24,73 Gew.-%.

Beispiele 13 bis 15

Polymerisation im kontinuierlichen 200 1-Gasphasenreaktor

Die Polymerisationen wurden in einem vertikal durchgemischten Gasphasenreaktor mit einem Nutzvolumen von 200 1 durchgeführt. Der Reaktor enthielt ein bewegtes Festbett aus feinteiligem Polymerisat. Der Reaktorausstoß betrug in allen Fällen 20 kg Polypropylen pro Stunde. Die Polymerisationsergebnisse von Beispiel 13, 14 und 15 sind in Tabelle 4 aufgelistet.

Beispiel 13

In den Gasphasenreaktor wurde bei einem Druck von 24 bar und einer Temperatur von 60°C flüssiges Propylen entspannt. Die Dosierung des Katalysators aus Beispiel 12 erfolgte zusammen mit dem zur Druckregelung zugesetzten Propylen. Die zudosierte Katalysatormenge wurde so bemessen, daß der mittlere Ausstoß von 20 kg/h aufrecht erhalten wurde. Ebenfalls zudosiert wurde Triisobutylaluminium (TIBA) in einer Menge von 30 mmol/h als 1 molare Lösung in Heptan. Durch kurzzeitiges Entspannen des Reaktors über ein Tauchrohr wurde sukzessive Polymer aus dem Reaktor entfernt. Die Berechnung der Produktivität erfolgte aus dem Siliciumgehalt des Polymeren nach der folgenden Formel:

P = Si-Gehalt des Katalysators/Si-Gehalt des Produkts

Die verfahrenstechnischen Parameter und charakteristischen Produkteigenschaften gehen aus der Tabelle 4 hervor.

Beispiel 14

Beispiel 13 wurde wiederholt mit dem Unterschied, daß als Molekulargewichtsregler Wasserstoff eingesetzt wurde. Die Wasserstoffkonzentration im Reaktionsgas wurde gaschromatographisch ermittelt. Die verfahrenstechnischen Parameter und charakteristischen Produkteigenschaften gehen aus der Tabelle 4 hervor.

Beispiel 15

Beispiel 13 wurde wiederholt mit dem Unterschied, daß 1-Buten als Comonomeres in den Reaktor zudosiert wurde. Die Butenkonzentration im Reaktionsgas wurde gaschromatographisch ermittelt. Die verfahrenstechnischen Parameter und chrakteristischen Produkteigenschaften gehen aus der Tabelle 4 hervor.

Tabelle 4
Ergebnisse der kontinuierlichen Polymerisationsversuche aus den Vergleichsbeispielen J, K und L und aus den Beispielen 17, 18 und 19

| | Vergleichs-beispiel J | Vergleichs-beispiel K | Vergleichs-beispiel L | Beispiel 13 | Beispiel 14 | Beispiel 15 |
|---|---|---|---|---|---|---|
| p/T [bar/°C] | 24/60 | 24/60 | 24/60 | 24/60 | 24/60 | 24/60 |
| TIBA [mmol/h] | 30 | 30 | 30 | 30 | 30 | 30 |
| H2 [1/Vol%] | 0 | 0,110 | 0 | 0 | 0,105 | 0 |
| 1-Buten [Vol%] | 0 | 0 | 4,6 | 0 | 0 | 4,5 |
| Produktdaten | | | | | | |
| MFR [g/10']a) | 4,7 | 21,3 | 3,9 | 4,6 | 20,6 | 4,1 |
| DSC [°C] | 146,7 | 145,8 | 133,8 | 146,5 | 145,6 | 133,4 |
| eta [dl/g] | 2,17 | 1,57 | 2,28 | 2,19 | 1,55 | 2,27 |
| XL [%] | 0,4 | 0,5 | 0,4 | 0,4 | 0,5 | 0,5 |
| Si [ppm] | 41,00 | 28,40 | 44,59 | 20,02 | 16,49 | 20,78 |
| Prod. [gPP/gKat] | 6.200 | 8.950 | 5.700 | 12.350 | 15.000 | 11.900 |

a) Nach ISO 1133

Beispiele 16 und 17 und Vergleichsbeispiele M und N

1. Spinnversuche

Beispiel 16 und Vergleichsbeispiel M

Die Spinnversuche wurden auf einer Spinn-Streck-Texturieranlage Barmag 4E/1-Rieter J0/10 durchgeführt. Die Spinntemperaturen betrugen 240°C, das Reckverhältnis 1:3,4 bei einer Streckgeschwindigkeit von 2.000 m/min. Es wurde ein Titer von etwa dtex1220 f68 mit trilobaler Düsengeometrie gesponnen. Vor der Spinndüse wurde eine Schmelzesiebpackung von 6.000/1.500/300 mesh eingesetzt. Der Anfangsdruck vor der Siebpackung betrug 60 bar. Der Anblaswind betrug 0,8 m/sec, die Anblastemperatur 18°C, der Präparationsauftrag 0,8 %. Das Spinnverhalten sowie die Fasereigenschaften sind der Tabelle S1 zu entnehmen. Für die Spinnversuche wurde je ein Metallocenhomopolymer mit der Fließfähigkeit 20 g/10 min aus Vergleichsbeispiel K (Vergl.Beisp. M) und Beispiel 14 (Beispiel 16) eingesetzt.

Vergleichsbeispiel M: Katalysator auf granulärem Kieselgel nach Vergleichsbeispiel I;

Beispiel 20: Katalysator auf sphärischem Kieselgel nach Beispiel 12.

Tabelle S1

| | Einheit | Norm | Vergleichsbeispiel M | Beispiel 16 |
|---|---|---|---|---|
| MFR 230°C/2,16 kg | g/10 min | ISO 1133 | 21,3 | 20,6 |
| Spinnverhalten | - | | kontinuierlicher Druckanstieg vor der Siebpackung, Spinnn- und Reckbrüche der Filamente | Kein Druckanstieg vor der Siebpackung, keine Spinn- und Reckbrüche |
| Titer | dtex | DIN 53830 | 1.216 | 1.224 |
| Festigkeit | cN/dtex | | 1,95 | 2,14 |
| Dehnung | % | | 107 | 102 |
| Uster[a)] | % | | 1,68 | 1,06 |

a) Bestimmung der Ungleichmäßigkeit (Masseschwankungen) an Multifilamenten. Das zu prüfende Material durchläuft einen Meßkopf, der kapazitiv einen Momentwert proportional zur linearen Dichte (Titer) des Filaments ermittelt. Aus diesen Momentwerten wird eine Kennzahl für die prozentuale Ungleichmäßigkeit errechnet.

Wie aus der Tabelle S1 ersichtlich ist, zeigt das Polypropylen aus Vergleichsbeispiel M deutlich schlechteres Spinn- und Reckverhalten durch Filamentbrüche sowie schlechtere Filamenteigenschaften wie geringere Filamentfestigkeit und eine höhere Filamentungleichmäßigkeit, ausgedrückt durch den Usterwert, im Vergleich zum Polypropylen aus Beispiel 16

2. Flachfolienversuch

Beispiel 17 und Vergleichsbeispiel N

Für die Versuche wurden Folien auf einer Flachfolienanlage hergestellt. Diese bestand aus einem 90 mm Barmagextruder mit einer 25 D-Schnecke mit Mischteil und einer 800 mm Johnsondüse mit einem Düsenspalt von 0,5 mm. Die Temperaturen im Extruder betrugen aufsteigend 210°C bis 255°C, die Düsentemperatur 250°C. Die Kühlwalzentemperatur betrug 20°C, die Folienabzugsgeschwindigkeit 14 m/min bei einer Förderleistung von 30 kg/h.
Für die Flachfolienversuche wurde je ein Metallocenhomopolymer mit der Fließfähigkeit 7 g/10 min, Herstellung analog Vergleichsbeispiel K und Beispiel 14 verwendet.

Vergleichsbeispiel N: Katalysator auf granulärem Kieselgel nach Vergleichsbeispiel I;

Beispiel 17: Katalysator auf sphärischem Kieselgel nach Beispiel 12

Die Folieneigenschaften sind der Tabelle F2 zu entnehmen.

Tabelle F2

| Eigenschaft | Norm | Einheit | Vergleichsbeispiel N | Beispiel 17 |
|---|---|---|---|---|
| MFR 230°C/2,16 kg | ISO 1133 | g/10 min | 7 | 7 |
| Foliendicke | | µm | 50 | 50 |
| Festigkeit: längs quer | ISO 527 | $N/mm^2$ | 39,9<br>38,9 | 40,1<br>39,2 |
| Dehnung: längs quer | ISO 527 | % | 750<br>760 | 760<br>770 |
| E-Modul: längs quer | DIN 53121 | $N/mm^2$ | 880<br>860 | 880<br>870 |
| Haze nach 7 Tagen | ASTM D 1003 | % | 1,6 | 1,1 |
| Glanz (20°C) nach 7 Tagen) | ISO 2813 | Skt | 107 | 113 |

Wie aus Tabelle F2 ersichtlich ist, zeigen die Folien nach Beispiel 17 bessere Folieneigenschaften, insbesondere bessere optische Eigenschaften wie geringeren Haze oder höheren Glanz, als die Folien nach Vergleichsbeispiel N.

**Patentansprüche**

1. Katalysatorsysteme zur Polymerisation von $C_2$- bis $C_{12}$-Alk-1-enen, enthaltend

   $A_)$ einen anorganischen Träger,

   $B_)$ mindestens einen Metallocenkomplex,

   $C_)$ mindestens eine metalloceniumionenbildende Verbindung und

   $D_)$ gegebenenfalls mindestens eine organische Metallverbindung eines Alkali- oder Erdalkalimetalls oder eines Metalls der III. Hauptgruppe des Periodensystems,

   wobei als anorganischer Träger ein anorganisches Oxid verwendet wird, welches einen pH-Wert von 1 bis 6 und Hohlräume und Kanäle aufweist, deren makroskopischer Volumenanteil am Gesamtpartikel im Bereich von 5 bis 30 % liegt.

2. Katalysatorsysteme nach Anspruch 1, wobei der anorganische Träger $A_)$ einen pH-Wert von 2 bis 5,5 und Hohlräume und Kanäle aufweist, deren makroskopischer Volumenanteil am Gesamtpartikel im Bereich von 8 bis 30 % liegt.

3. Katalysatorsysteme nach einem der Ansprüche 1 oder 2, wobei der anorganische Träger einen mittleren Teilchendurchmesser von 5 bis 200 µm, einen mittleren Teilchendurchmesser der Primärpartikel von 1 bis 20 µm und Hohlräume und Kanäle mit einem mittleren Durchmesser von 0,1 bis 20 µm aufweist.

4. Katalysatorsysteme nach den Ansprüchen 1 bis 3, wobei es sich bei dem anorganischen Träger um einen Oxid des Siliciums, des Aluminiums, des Titans oder um ein Oxid eines Metalls der I. bzw. der II. Hauptgruppe des Periodensystems handelt.

5. Katalysatorsysteme nach dem Anspruch 4, wobei es sich bei dem anorganischen Träger um Kieselgel ($SiO_2$)

handelt.

**6.** Katalysatorsysteme nach dem Anspruch 5, wobei das verwendete Kieselgel ($SiO_2$) sprühgetrocknet ist.

**7.** Katalysatorsysteme nach den Ansprüchen 1 bis 6, wobei ein Metallocenkomplex B) des Titans, Zirkoniums oder Hafniums verwendet wird.

**8.** Katalysatorsysteme nach den Ansprüchen 1 bis 7, wobei als organische Metallverbindung D) eine Metallverbindung der allgemeinen Formel I verwendet wird,

$$M^1 (R^1)_r (R^2)_s (R^3)_t \qquad \text{I}$$

in der

| | |
|---|---|
| $M^1$ | ein Alkali-, ein Erdalkalimetall oder ein Metall der III. Hauptgruppe des Periodensystems bedeutet, |
| $R^1$ | Wasserstoff, $C_1$- bis $C_{10}$-Alkyl, $C_6$- bis $C_{15}$-Aryl, Alkylaryl oder Arylalkyl mit jeweils 1 bis 10 C-Atomen im Alkylrest und 6 bis 20 C-Atomen im Arylrest, |
| $R^2$ und $R^3$ | Wasserstoff, Halogen, $C_1$- bis $C_{10}$-Alkyl, $C_6$- bis $C_{15}$-Aryl, Alkylaryl, Arylalkyl oder Alkoxy mit jeweils 1 bis 10 C-Atomen im Alkylrest und 6 bis 20 C-Atomen im Arylrest, |
| r | eine ganze Zahl von 1 bis 3 |

und

s und t ganze Zahlen von 0 bis 2 bedeuten, wobei die Summe r+s+t der Wertigkeit von $M^1$ entspricht.

**9.** Katalysatorsysteme nach den Ansprüchen 1 bis 8, wobei als metalloceniumionenbildende Verbindung C) offenkettige oder cyclische Alumoxanverbindungen der allgemeinen Formel II oder III eingesetzt werden,

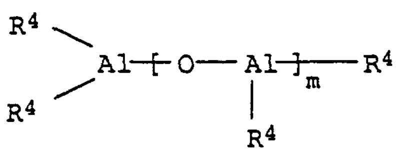

II

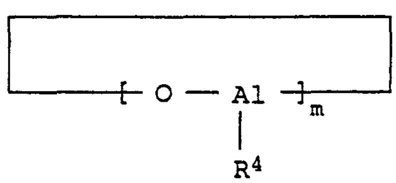

III

wobei

$R^4$ eine $C_1$- bis $C_4$-Alkylgruppe bedeutet und m für eine ganze Zahl von 5 bis 30 steht.

**10.** Verfahren zur Herstellung von Polymerisaten von $C_2$- bis $C_{12}$-Alk-1-enen bei Temperaturen im Bereich von -50 bis 300°C und Drücken von 0,5 bis 3000 bar, **dadurch gekennzeichnet, daß** man ein Katalysatorsystem gemäß einem der Ansprüche 1 bis 9 verwendet.

**11.** Verfahren nach Anspruch 10, **dadurch gekennzeichnet, daß** die Polymerisation in flüssigen Monomeren oder in der Gasphase erfolgt.

**12.** Verfahren nach einem der Ansprüche 10 oder 11, **dadurch gekennzeichnet, daß** zunächst eine Vorpolymerisation in Suspension oder in flüssigen Monomeren erfolgt.

**13.** Verfahren nach einem der Ansprüche 10 bis 12, **dadurch gekennzeichnet, daß** man als $C_2$- bis $C_{12}$-Alk-1-ene Propylen verwendet.

**14.** Verfahren nach einem der Ansprüche 10 bis 12, **dadurch gekennzeichnet, daß** man als $C_2$- bis $C_{12}$-Alk-1-en Ethylen verwendet.

**Claims**

**1.** A catalyst system for polymerizing $C_2$-$C_{12}$-alk-1-enes, comprising

A) an inorganic support,

B) at least one metallocene complex,

C) at least one compound capable of forming metallocenium ions and

D) if desired, at least one organic metal compound of an alkali metal or alkaline earth metal or a metal of main group III of the Periodic Table,

wherein the inorganic support used is an inorganic oxide which has a pH of from 1 to 6 and voids and channels whose macroscopic proportion by volume based on the total particle is in the range from 5 to 30 %.

**2.** A catalyst system as claimed in claim 1, wherein the inorganic support A) has a pH of from 2 to 5.5 and voids and channels whose macroscopic proportion by volume based on the total particle is in the range from 8 to 30 %.

**3.** A catalyst system as claimed in claim 1 or 2, wherein the inorganic support has a mean particle diameter of from 5 to 200 µm, a mean particle diameter of the primary particles of from 1 to 20 µm and voids and channels having a mean diameter of from 0.1 to 20 µm.

**4.** A catalyst system as claimed in any of claims 1 to 3, wherein the inorganic support is an oxide of silicon, of aluminum, of titanium or is an oxide of a metal of main group I or II of the Periodic Table.

**5.** A catalyst system as claimed in claim 4, wherein the inorganic support is silica gel ($SiO_2$).

**6.** A catalyst system as claimed in claim 5, wherein the silica gel ($SiO_2$) used has been spray dried.

**7.** A catalyst system as claimed in any of claims 1 to 6, wherein a metallocene complex B) of titanium, zirconium or hafnium is used.

**8.** A catalyst system as claimed in any of claims 1 to 7, wherein the organic metal compound D) used is a metal compound of the general formula I,

$$M^1 (R^1)_r (R^2)_s (R^3)_t \qquad I$$

where

$M^1$ is an alkali metal, an alkaline earth metal or a metal of main group III of the Periodic Table,

$R^1$ is hydrogen, $C_1$-$C_{10}$-alkyl, $C_6$-$C_{15}$-aryl, alkylaryl or arylalkyl each having from 1 to 10 carbon atoms in the alkyl radical and from 6 to 20 carbon atoms in the aryl radical,

$R^2$ and $R^3$ are hydrogen, halogen, $C_1$-$C_{10}$-alkyl, $C_6$-$C_{15}$-aryl, alkylaryl, arylalkyl or alkoxy each having from 1

to 10 carbon atoms in the alkyl radical and from 6 to 20 carbon atoms in the aryl radical,

r is an integer from 1 to 3

and

s and t are integers from 0 to 2, with the sum r+s+t corresponding to the valence of $M^1$.

**9.** A catalyst system as claimed in any of claims 1 to 8, wherein compounds $C_)$ capable of forming metallocenium ions which are used are open-chain or cyclic aluminoxane compounds of the general formula II or III,

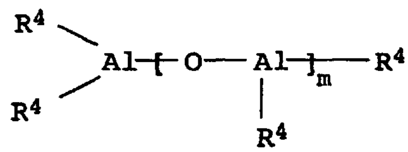

II

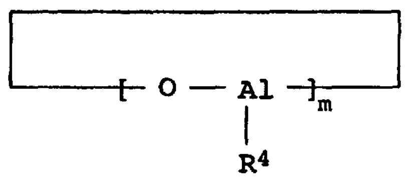

III

where

$R^4$ is a $C_1$-$C_4$-alkyl group and m is an integer from 5 to 30.

**10.** A process for preparing polymers of $C_2$-$C_{12}$-alk-1-enes at from -50 to 300°C and pressures of from 0.5 to 3000 bar, wherein use is made of a catalyst system as claimed in any of claims 1 to 9.

**11.** A process as claimed in claim 10, wherein the polymerization is carried out in liquid monomers or in the gas phase.

**12.** A process as claimed in claim 10 or 11, wherein a prepolymerization is first carried out in suspension or in liquid monomers.

**13.** A process as claimed in any of claims 10 to 12, wherein propylene is used as $C_2$-$C_{12}$-alk-1-ene.

**14.** A process as claimed in any of claims 10 to 12, wherein ethylene is used as $C_2$-$C_{12}$-alk-1-ene.

## Revendications

**1.** Systèmes de catalyseur destinés à la polymérisation d'alc-1-ènes en $C_2$ à $C_{12}$, comprenant

A) un support inorganique,
B) au moins un complexe métallocène,
C) au moins un composé formant des ions métallocénium et
D) éventuellement au moins un composé métallique organique d'un métal alcalin ou alcalino-terreux ou d'un métal du IIIème Groupe Principal de la Classification Périodique des Eléments,

en mettant en oeuvre, en tant que support inorganique, un oxyde inorganique qui présente un pH compris entre 1 et 6, et qui comprend des cavités et des canaux qui représentent une proportion volumique macroscopique comprise dans la plage de 5% à 30%, par rapport à la totalité de la particule.

**2.** Systèmes de catalyseur selon la revendication 1, **caractérisés en ce que** le support inorganique A) présente un pH compris entre 2 et 5,5 et qui comprend des cavités et des canaux qui représentent une proportion volumique macroscopique, par rapport à la totalité de la particule, comprise dans la plage de 8% à 30%.

**3.** Systèmes de catalyseur selon l'une des revendications 1 ou 2, **caractérisés en ce que** le support inorganique présente une granulométrie moyenne comprise entre 5 µm et 200 µm, des particules primaires présentant une granulométrie moyenne comprise entre 1 µm et 20 µm et des cavités et des canaux présentant un diamètre moyen compris entre 0,1 µm et 20 µm.

**4.** Systèmes de catalyseur selon les revendications 1 à 3, **caractérisés en ce que** le support inorganique est un oxyde du silicium, de l'aluminium, du titane ou bien un oxyde d'un métal du Ier ou du IIème Groupe Principal de la Classification Périodique des Eléments.

**5.** Systèmes de catalyseur selon la revendication 4, **caractérisés en ce que** le support inorganique est le gel de silice ($SiO_2$).

**6.** Systèmes de catalyseur selon la revendication 5, **caractérisés en ce que** le gel de silice ($SiO_2$) mis en oeuvre est séché par pulvérisation.

**7.** Systèmes de catalyseur selon les revendications 1 à 6, **caractérisés en ce que** l'on met en oeuvre un complexe métallocène B) du titane, du zirconium ou de l'hafnium.

**8.** Systèmes de catalyseur selon les revendications 1 à 7, **caractérisés en ce que** l'on met en oeuvre, en tant que composé métallique organique D), un composé métallique de formule générale I,

$$M^1 (R^1)_r (R^2)_s (R^3)_t \qquad I$$

dans laquelle

| | |
|---|---|
| $M^1$ | représente un atome de métal alcalin, alcalinoterreux ou un atome métallique du IIIème Groupe Principal de la Classification Périodique des Eléments, |
| $R^1$ | représente un atome d'hydrogène, un groupe alkyle en $C_1$ à $C_{10}$, aryle en $C_6$ à $C_{15}$, alkylaryle ou arylalkyle présentant chacun 1 à 10 atomes de C dans le reste alkyle et 6 à 20 atomes de C dans le reste aryle, |
| $R^2$ et $R^3$ | représentent un atome d'hydrogène, d'halogène, un groupe alkyle en $C_1$ à $C_{10}$, aryle en $C_6$ à $C_{15}$, alkylaryle, arylalkyle ou alcoxy présentant chacun 1 à 10 atomes de C dans le reste alkyle et 6 à 20 atomes de C dans le reste aryle, |
| r | représente un nombre entier compris entre 1 et 3 et |
| s et t | représentent un nombre entier compris entre 0 et 2, où la somme r+s+t correspond à la valence de $M^1$. |

**9.** Systèmes de catalyseur selon les revendications 1 à 8, **caractérisés en ce que** l'on met en oeuvre, en tant que composé formant des ions métallocénium C), un composé alumoxane à chaîne ouverte ou cyclique de formule II ou III,

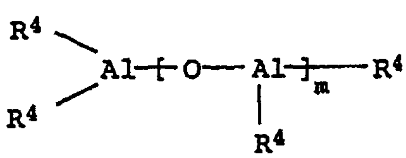

II

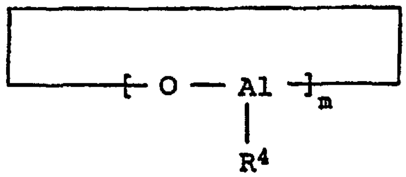

III

dans lesquelles

$R^4$ représente un groupe alkyle en $C_1$ à $C_4$ et m représente un nombre entier compris entre 5 et 30.

**10.** Procédé pour la préparation de polymères d'alc-1-ènes en $C_2$ à $C_{12}$ à une température comprise dans la plage de -50°C à 300°C et à une pression comprise entre 0,5 bar et 3 000 bars, **caractérisé en ce que** l'on met en oeuvre un système de catalyseurs selon l'une quelconque des revendications 1 à 9.

**11.** Procédé selon la revendication 10, **caractérisé en ce que** l'on réalise la polymérisation dans le monomère liquide ou en phase gazeuse.

**12.** Procédé selon l'une des revendications 10 ou 11, **caractérisé en ce que** l'on procède, dans un premier temps, à une pré-polymérisation en suspension ou dans le monomère liquide.

**13.** Procédé selon l'une quelconque des revendications 10 à 12, **caractérisé en ce que** l'on met en oeuvre, en tant qu'alc-1-ène en $C_2$ à $C_{12}$, le propylène.

**14.** Procédé selon l'une quelconque des revendications 10 à 12, **caractérisé en ce que** l'on met en oeuvre, en tant qu'alc-1-ène en $C_2$ à $C_{12}$, l'éthylène.